# EUROPEAN PATENT APPLICATION

(11) **EP 1 887 125 A1**
(43) Date of publication of application: **13.02.2008**
(21) Application number: 06118509.6
(22) Date of filing: 07.08.2006
(51) Int. Cl.: D06F 37/22, D06F 37/24, F16F 7/116

(54) **Adjustable tuned mass damper for a laundry treating machine**

(71) Applicant: Electrolux Home Products Corporation N.V., 1930 Zaventem (BE)
(72) Inventor: Colombera, Giovanni, 33077 Sacile (IT); Galassi, Stefano, 33070 Ranzano (IT); Pezzutto, Alberto, 31045 Motta di Livenza (IT); Salvati, Biagio, 30029 Santo Stino di Livenza (IT)
(74) Representative: Jorio, Paolo

(57) **Abstract**

A tuned vibration damper (17) for a laundry machine (1) having a casing (2), and a revolving drum (5) supported by the casing (2). The tuned vibration damper (17) is tuned to vibrate out of phase with machine vibration at a resonant frequency, and has: an oscillating mass (19); a spring system (20) suspending the oscillating mass (19) from the casing (2) and having at least one spring (21); and a regulating device (22) for regulating the resonant frequency of the tuned vibration damper (17).

## Description

### TECHNICAL FIELD

The present invention relates to a tuned vibration damper for a laundry machine.

The tuned vibration damper of the present invention may be used to particular advantage in a washing machine, to which the following description refers purely by way of example.

### BACKGROUND ART

A problem inherent in a washing machine is highspeed rotation of its dynamic system often producing severe machine vibration, which is transferred to the casing, and which typically becomes more problematic as the rotation speed of the dynamic system increases. For example, an unbalanced revolving drum (defining a wash tub) of a washing machine transfers most vibration to the casing during the spin cycle.

Prior-art revolving drums have been designed to "float" on suspension systems to absorb some vibration before it reaches the casing. In critical installation conditions, however, more is needed to reduce the vibration that reaches the casing. In particular, when a washing machine rests on a flexible floor (e.g. a wooden floor, a soft floor, or a floor resting on a thin slab), the vibration generated by the washing machine (especially during the spin cycle) may be resonance-amplified to an unacceptable noise level, and may damage not only the washing machine but also the floor.

Prior art (as disclosed in US5924312A1, for example), proposes a washing machine with a tuned vibration damper, which is fixed rigidly to the casing to reduce vibration of the washing machine at resonance speeds, and which comprises an oscillating mass, and a spring system suspending the oscillating mass from the washing machine casing. The oscillating mass and the spring system are tuned to vibrate out of phase with dangerous (resonance) machine vibration as the revolving drum rotates, thereby reducing machine vibration.

The drum rotation speeds at which resonance phenomena occur mainly depend, however, on installation conditions, and in particular on the type of floor, and so vary from one machine to another and from one installation to another, so that it is practically impossible to determine precisely beforehand, at the manufacturing stage, the dangerous (resonance) frequencies at which to tune the tuned vibration damper. Accordingly, in known washing machines with tuned vibration dampers, performance of the dampers is not always entirely satisfactory and is invariably below expectations.

### DISCLOSURE OF INVENTION

It is an object of the present invention to provide a tuned vibration damper for a laundry machine, designed to eliminate the aforementioned drawbacks, and which is cheap and easy to implement.

According to the present invention, there is provided a tuned vibration damper for a laundry machine, as claimed in the accompanying Claims.

### BRIEF DESCRIPTION OF THE DRAWINGS

A non-limiting embodiment of the present invention will be described by way of example with reference to the accompanying drawings, in which:

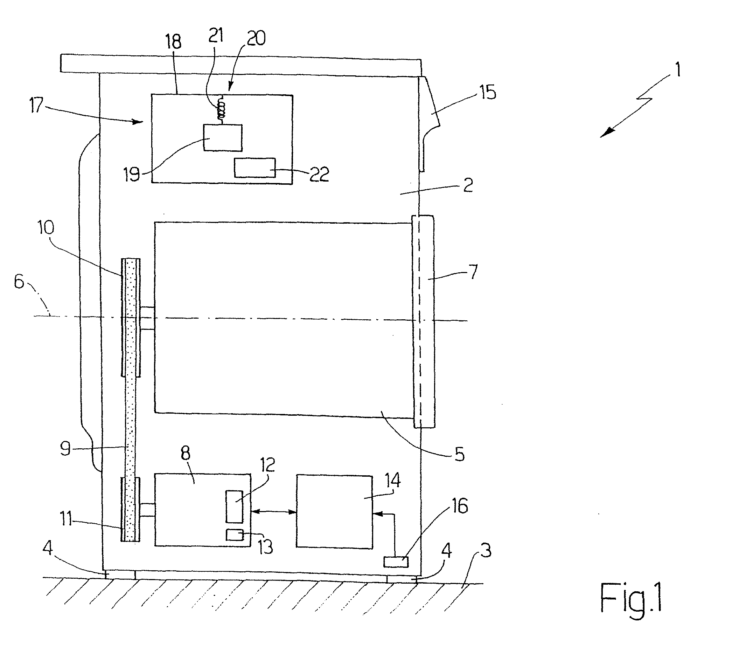

Figure 1 shows a schematic side view of a washing machine with a tuned vibration damper in accordance with the present invention;
Figure 2 shows a schematic side view of a spring of the Figure 1 tuned vibration damper;
Figure 3 shows a schematic view of an oscillating mass of the Figure 1 tuned vibration damper; and
Figure 4 shows a schematic view of an oscillating mass of an alternative embodiment of the Figure 1 tuned vibration damper.

### PREFERRED EMBODIMENTS OF THE INVENTION

Number 1 in the attached drawing indicates as a whole a washing machine comprising a casing 2 resting on a floor 3 on a number of feet 4. Casing 2 supports a revolving drum 5 (defining a wash tub) which rotates about a horizontal rotation axis 6 (in alternative embodiments not shown, rotation axis 6 may be tilted or vertical), and front access to which is closed by a door 7 hinged to casing 2.

Drum 5 is rotated about rotation axis 6 by an electric motor 8 connected to drum 5 by a transmission system, which comprises a belt 9 connecting a pulley 10, fitted to the shaft of drum 5, directly to a pulley 11 fitted to the shaft of electric motor 8. In an alternative embodiment not shown, electric motor 8 is coaxial with drum 5, and the shaft of drum 5 is connected rigidly to the shaft of electric motor 8.

Electric motor 8 is equipped with a drive system 12; and a tachometer generator 13 (or other equivalent speed-sensing device) for measuring the speed of electric motor 8 and therefore the rotation speed of drum 5. Drive system 12 of the motor is preferably operated on the basis of the difference between the command (desired) speed and the actual speed as read by tachometer generator 13.

Washing machine 1 also comprises a control unit 14, which receives user commands from a user interface 15, and controls overall operation of washing machine 1. Control unit 14 is connected to at least one machine vibration-sensing accelerometer 16 located close to a foot 4 and therefore close to floor 3. In an alternative embodiment not shown, vibration-sensing accelerometer 16 is replaced by a different type of motion sensor.

Control unit 14 implements a known method of analysing machine vibration to determine the rotation speeds at which machine vibration is maximum and/or minimum and so identify the rotation speeds at which resonance phenomena occur. During normal use, drum 5 is obviously rotated at different speeds from those at which resonance phenomena occur. The method of determining the rotation speeds at which machine vibration is maximum and/or minimum may be performed once only, after the washing machine is actually installed, may be performed at given periods, or may be performed at each cycle.

Washing machine 1 also comprises a tuned vibration damper 17 fixed rigidly to casing 2 to reduce vibration of washing machine 1 at resonance speeds. Tuned vibration damper 17 comprises a rigid frame 18 fixed rigidly (welded or screwed) to casing 2; an oscillating mass 19 housed inside frame 18; and a spring system 20 suspending oscillating mass 19 from frame 18 and therefore from casing 2. Oscillating mass 19 and spring system 20 are tuned to vibrate out of phase with dangerous (resonance) machine vibration as revolving drum 5 rotates, thereby reducing machine vibration. In other words, tuned vibration damper 17 is a passive auxiliary mass damper, in which the response of a primary oscillating system (casing 2 of washing machine 1) is attenuated by a relatively small auxiliary oscillating mass 18 attached to the primary oscillating system by a resilient element (spring system 20).

More specifically, tuned vibration damper 17 is a dynamic vibration neutralizer (DVN), also known as a Frahm damper, and relies on "tuning" auxiliary oscillating mass 19 to generate an opposing force capable of reducing motion of the primary oscillating system (casing 2 of washing machine 1) in steady-state conditions.

Spring system 20 comprises at least one spring 21 connected at one end to frame 18 and at the other end to oscillating mass 19. In different embodiments, spring system 20 may obviously comprise more than one spring 21.

Tuned vibration damper 17 also comprises a regulating device 22 for regulating the resonant frequency of tuned vibration damper 17, in particular, by adjusting the stiffness of spring 21 or the magnitude of oscillating mass 19. The resonant frequency of tuned vibration damper 17, in fact, is proportional to the ratio between the stiffness of spring 21 and the magnitude of oscillating mass 19, and so increases by increasing the stiffness of spring 21 and/or by reducing the magnitude of oscillating mass 19, and vice versa.

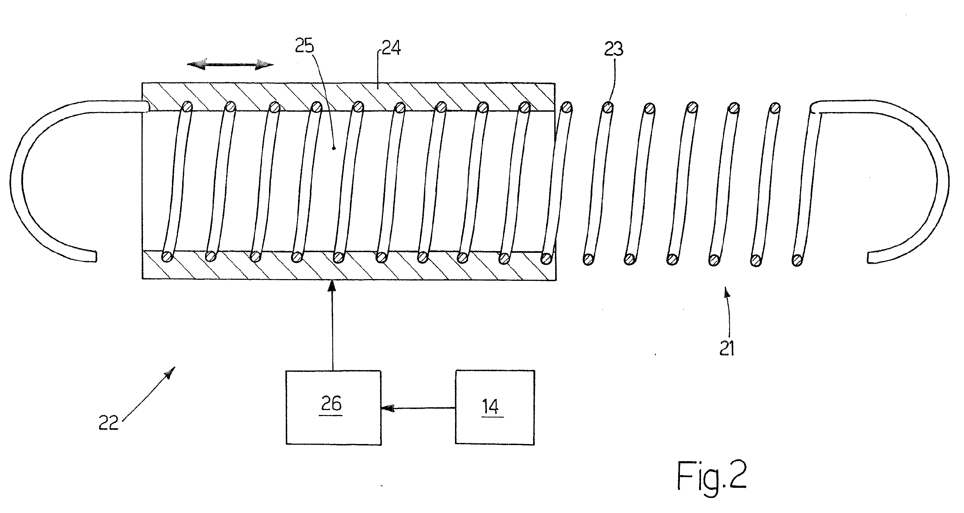

With reference to Figure 2, spring 21 has a number of turns 23, and regulating device 22 adjusts the number of active turns 23 of spring 21 to adjust the stiffness of spring 21. In a preferred embodiment shown in Figure 2, regulating device 22 comprises a threaded cylinder 24, which is coaxial with and screw-coupled to spring 21 to lock and so deactivate a number of turns 23 of spring 21. Threaded cylinder 24 rotates with respect to spring 21 to adjust its longitudinal position with respect to spring 21 and so adjust the number of turns 23 locked by threaded cylinder 24.

In other words, apart from its material properties, the stiffness of spring 21 depends solely on geometrical quantities: wire diameter, mean spring diameter, and the number of active turns 23; and the only quantity that can be modified easily is the number of active turns 23, which is done by screw-coupling spring 21 and a threaded cylinder 24.

In the preferred embodiment in Figure 2, spring 21 is located inside a central hole 25 of threaded cylinder 24. In a different embodiment not shown, spring 21 is located on the outside of threaded cylinder 24.

In the Figure 2 embodiment, regulating device 22 comprises a motor 26 controlled by control unit 14 and connected mechanically to threaded cylinder 24 to rotate threaded cylinder 24 with respect to spring 21 and adjust the longitudinal position of threaded cylinder 24 with respect to spring 21. In a further embodiment, threaded cylinder 24 may also or only be rotated manually with respect to spring 21.

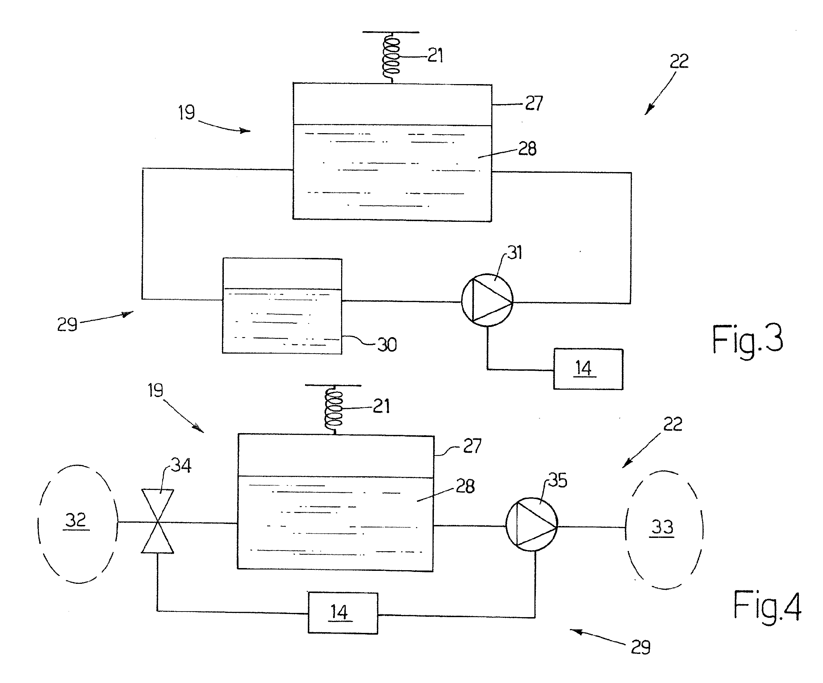

With reference to Figures 3 and 4, regulating device 22 adjusts the magnitude of oscillating mass 19. More specifically, oscillating mass 19 comprises a liquid container 27, which is filled with a variable quantity of liquid 28 to adjust the magnitude of oscillating mass 19.

Regulating device 22 preferably comprises a hydraulic circuit 29 for filling or draining container 27. In the Figure 3 embodiment, hydraulic circuit 29 is a closed circuit, and comprises a reservoir 30 containing liquid 28; and a pump 31 for transferring liquid 28 from reservoir 30 to container 27 and vice versa. In the Figure 4 embodiment, hydraulic circuit 29 is an open circuit connectable to a water mains 32 to fill container 27, and to a drain 33 to drain container 27. More specifically, hydraulic circuit 29 comprises a tap 34 connecting container 27 to water mains 32; and a pump 35 connecting container 27 to drain 33 (pump 35 may be replaced by a further tap).

In the Figure 3 and 4 embodiments, pumps 31 and 35 and tap 34 are servocontrolled by control unit 14. In a further embodiment, pumps 31 and 35 and tap 34 are also or only operated manually.

It is important to point out that, to regulate the resonant frequency of tuned vibration damper 17, regulating device 22 may only adjust the stiffness of spring 21 (the magnitude of oscillating mass 19 is constant), may only adjust the magnitude of oscillating mass 19 (the stiffness of spring 21 is constant), or may adjust both the stiffness of spring 21 and the magnitude of oscillating mass 19. By adjusting both the stiffness of spring 21 and the magnitude of oscillating mass 19, the resonant frequency of tuned vibration damper 17 is obviously adjustable over a wider range, but the cost of regulating device 22 is higher.

To regulate the resonant frequency of tuned vibration damper 17, as described above, regulating device 22 may be driven automatically by control unit 14 or operator-controlled manually.

When regulating device 22 is operator-controlled manually, the resonant frequency of tuned vibration damper 17 is only regulated once, when installing washing machine 1.

When regulating device 22 is driven automatically by control unit 14, the resonant frequency of tuned vibration damper 17 may be regulated at any time, during normal use of washing machine 1, as a function of a signal supplied by accelerometer 16, to minimize machine vibration. In other words, the resonant frequency of tuned vibration damper 17 is regulated simultaneously with machine vibration measurement by accelerometer 16, to minimize vibration.

Tuned vibration damper 17, as described above, has numerous advantages, by being easy to implement and allowing fine tuning of resonance frequencies to adapt to actual installation conditions. The same tuned vibration damper 17 may therefore be adapted easily to different washing machine models, thus reducing the production cost of tuned vibration damper 17.

Though particularly advantageous for a washing machine, the above structure also applies to any other kind of laundry machine, such as a drier or a washer-drier.

## Claims

1. A tuned vibration damper (17) for a laundry machine (1) having a casing (2), and a revolving drum (5) supported by the casing (2); the tuned vibration damper (17) is tuned to vibrate out of phase with machine vibration at at least one resonant frequency, and comprises:
an oscillating mass (19); and
a spring system (20) suspending the oscillating mass (19) from the casing (2) and comprising at least one spring (21);
the tuned vibration damper (17) is **characterized by** comprising a regulating device (22) for regulating the resonant frequency of the tuned vibration damper (17).

2. A tuned vibration damper (17) as claimed in Claim 1, wherein the regulating device (22) adjusts the stiffness of the spring (21) and/or adjusts the magnitude of the oscillating mass (19) to regulate the resonant frequency of the tuned vibration damper (17).

3. A tuned vibration damper (17) as claimed in Claim 1 or 2, wherein the regulating device (22) adjusts the stiffness of the spring (21) to regulate the resonant frequency of the tuned vibration damper (17).

4. A tuned vibration damper (17) as claimed in Claim 3, wherein the spring (21) has a number of turns (23); and the regulating device (22) adjusts the number of active turns (23) of the spring (21) to adjust the stiffness of the spring (21).

5. A tuned vibration damper (17) as claimed in Claim 4, wherein the regulating device (22) comprises a threaded cylinder (24), which is coaxial with the spring (21), is screw-coupled to the spring (21) to lock a number of turns (23) of the spring (21) and so deactivate the locked turns (23), and rotates with respect to the spring (21) to adjust its longitudinal position with respect to the spring (21).

6. A tuned vibration damper (17) as claimed in Claim 5, wherein the spring (21) is located inside a central hole (25) of the threaded cylinder (24).

7. A tuned vibration damper (17) as claimed in Claim 5 or 6, wherein the regulating device (22) comprises a motor (26) connected mechanically to the threaded cylinder (24) to rotate the threaded cylinder (24) with respect to the spring (21).

8. A tuned vibration damper (17) as claimed in Claim 5 or 6, wherein the threaded cylinder (24) may be rotated manually with respect to the spring (21).

9. A tuned vibration damper (17) as claimed in any Claims 1 to 8, wherein the regulating device (22) adjusts the magnitude of the oscillating mass (19) to regulate the resonant frequency of the tuned vibration damper (17).

10. A tuned vibration damper (17) as claimed in Claim 9, wherein the oscillating mass (19) comprises a liquid container (27) filled with a variable quantity of liquid (28) to adjust the magnitude of the oscillating mass (19).

11. A tuned vibration damper (17) as claimed in Claim 10, wherein the regulating device (22) comprises a hydraulic circuit (29) for filling or draining the container (27).

12. A tuned vibration damper (17) as claimed in Claim 11, wherein the hydraulic circuit (29) is a closed circuit, and comprises a reservoir (30) containing the liquid (28); and a first pump (31) for transferring the liquid (28) from the reservoir (30) to the container (27) and vice versa.

13. A tuned vibration damper (17) as claimed in Claim 11, wherein the hydraulic circuit (29) is an open circuit connectable to a water mains (32) to fill the container (27), and to a drain (33) to drain the container (27).

14. A tuned vibration damper (17) as claimed in Claim 13, wherein the hydraulic circuit (29) comprises a tap (34) connecting the container (27) to the water mains (32); and a second pump (35) connecting the container (27) to the drain (33).

15. A tuned vibration damper (17) as claimed any of Claims 1 to 14, wherein the regulating device (22) is connectable to a motion sensor (16), fitted to the casing (2) of the laundry machine (1), to regulate the resonant frequency of the tuned vibration damper (17) as a function of a signal supplied by the motion sensor (16), and so minimize machine vibration.

16. A tuned vibration damper (17) as claimed any of Claims 1 to 15 and comprising a rigid frame (18) fixed rigidly to the casing (2) of the laundry machine (1) and housing the oscillating mass (19) and the spring system (20).

17. A laundry machine (1) comprising a casing (2), a revolving drum (5) supported by the casing (2), and a tuned vibration damper (17) as claimed in any of claims 1 to 16 and connected to the casing (2).
